# EUROPEAN PATENT SPECIFICATION

(11) **EP 2 206 908 B1**
(45) Date of publication and mention of the grant of the patent: **05.12.2012**
(21) Application number: 10150079.1
(22) Date of filing: 05.01.2010
(51) Int. Cl.: F02D 41/02, F16H 61/14

(54) **Engine-torque control during gear shifting for a vehicle with an automatic transmission**
Motordrehmomentsteuerung während Gangwechsel in einem Kraftfahrzeug mit einem Automatikgetriebe
Contrôle de couple de moteur pendant le changement de rapport d'un véhicule muni d'une transmission automatique

(30) Priority: 09.01.2009 JP 2009003530
(43) Date of publication of application: 14.07.2010
(73) Proprietor: Honda Motor Co., Ltd., Tokyo 107-8556 (JP)
(72) Inventor: Noguchi, Tomoyuki, Saitama 351-0193 (JP); Watanabe, Shinichiro, Saitama 351-0193 (JP); Sasaki, Yuji, Saitama 351-0193 (JP)
(74) Representative: Beder, Jens

(56) References cited:
- EP-A2- 1 124 049
- EP-A2- 1 605 192
- EP-A2- 2 028 353
- DE-A1- 10 114 040
- US-A1- 2007 207 898
- US-A1- 2009 270 225

## Description

The present invention relates to an engine-torque controlling apparatus for which an engine and an automatic transmission are connected to each other through a torque converter including a lock-up clutch, and which controls a torque of the engine so as to prevent a frictional engagement member of the automatic transmission from slipping,

The following system is publicly known from Patent Document 1. In the system, in order to prevent an excess torque from acting on a device of a drive-train system connected to an engine, a transitional input torque is calculated by subtracting, from an engine torque, an inertial torque from the engine to the device of the drive-train system, and if the transitional input torque exceeds an allowable torque of said device, the engine torque is reduced.

In addition, the following system is publicly known from Patent Document 2. In the system, engine-torque-reduction control means executes an engine-torque-reduction control so as to prevent engagement elements, such as a clutch and a brake, in a power train of an automatic transmission from slipping if an excessive engine torque acts on the engagement elements. The maximum value of the allowable engine revolutions for the time while the engine-torque-reduction control means is operating properly is calculated with the torque ratio of a torque converter taken into consideration, and if the actual engine revolutions exceed the maximum value of the allowable engine revolutions, the system determines that the engine-torque-reduction control means malfunctions.Patent Document 3 discloses an engine-torque controlling apparatus according to the preamble of claim 1, wherein the torque-limiter-value calculation means calculates the torque limiter value by using, as parameter, the gear-shifting state.
[Patent Document 1] Japanese Patent No. 2764751
[Patent Document 2] Japanese Patent No. 2600982
[Patent Document 3] Japanese Patent No. 2002-39357

Incidentally, engaging a lock-up clutch provided in the torque converter increases the maximum value of the engine torque being inputted into the automatic transmission from the engine. Accordingly, while the lock-up clutch is not in engagement, frictional engagement members of the automatic transmission engage without slipping, but the slipping of the frictional engagement members of the automatic transmission possibly takes place while the lock-up clutch is in engagement. Detailed description of this phenomenon will be given below. Note that the engine torque that causes the slipping of the frictional engagement members of the automatic transmission varies depending upon the temperature of the oil for the automatic transmission and upon which gear is selected by the automatic transmission.

Each of the systems disclosed in Patent Documents 1 and 2 calculates the limiter value of the engine torque without taking account of the engagement state of the lock-up clutch of the torque converter, the temperature of the oil for the automatic transmission, or the gear selected by the automatic transmission. Accordingly, if the slipping of the frictional engagement members has to be prevented reliably, the engine torque is likely to be reduced more than necessary.

The invention has been made in view of the above-described circumstances. An object of the present invention is to minimize the amount of engine-torque reduction while reliably preventing the slipping of frictional engagement members of an automatic transmission, when an engine-torque-reduction control is executed to prevent the slipping of the frictional engagement members.

In order to achieve the above object, according to the invention described in claim 1, there is provided an engine-torque controlling apparatus for which an engine and an automatic transmission are connected to each other through a torque converter including a lock-up clutch, and which controls a torque of the engine so as to prevent a gear-shifting clutch of the automatic transmission from slipping, the engine-torque controlling apparatus characterized by comprising: lock-up-clutch engagement state determination means for determining an engagement state of the lock-up clutch; gear-shifting state determination means for determining a gear-shifting state of the automatic transmission; oil-temperature detection means for detecting a temperature of oil of the automatic transmission; engine-revolutions detection means for detecting engine revolutions; torque-limiter-value calculation means for calculating a torque limiter value of a torque capable of being output by the engine without causing any slipping of the gear-shifting clutch; and engine-torque control means for controlling a torque of the engine on the basis of the torque limiter value, the engine-torque controlling apparatus **characterized in that** the torque-limiter-value calculation means calculates the torque limiter value by using, as parameters, the engagement state of the lock-up clutch, the oil temperature, the engine revolutions, and the gear-shifting state.

According to the invention described in claim 2, in addition to the configuration of claim 1, there is provided the engine-torque controlling apparatus wherein switching of the torque limiter values from one to another based on the gear-shifting state is carried out while a phase of a gear-shifting process is being transitioned from a torque phase to an inertial phase.

According to the invention described in claim 3, in addition to the configuration of claim 1, there is provided the engine-torque controlling apparatus wherein the torque-limiter-value calculation means further includes: a slip-prevention torque-limiter-value calculation means for calculating a torque limiter value for slip prevention that can be outputted by the engine to the automatic transmission based on the engine revolutions, the temperature of the oil for the automatic transmission, the gear-shifting state of the automatic transmission, and the engagement state of the lock-up clutch; a stalling torque-limiter-value calculation means for outputting a torque limiter value at a time of stalling of the torque converter; a double-pedaling-action torque-limiter-value calculation means for outputting a torque limiter value at a time of double pedaling action of a brake pedal and an acceleration pedal; and a low-selection means for selecting the lowest value of the torque limiter value for slip prevention, the torque limiter value at the time of stalling, and the torque limiter value at the time of double pedaling action as the torque limiter value.

Note that an electronic control unit Ue of an engine of an embodiment corresponds to engine-torque control means of the present invention.

According to the configuration described in claim 1, the torque-limiter-value calculation means for calculating a torque limiter value which is a torque capable of being outputted by the engine without causing any slipping of the frictional engagement members of the automatic transmission calculates the torque limiter value on the basis of, as parameters, the engagement state of the lock-up clutch, the temperature of the oil for the automatic transmission, the engine revolutions, and the gear-shifting state of the automatic transmission. Accordingly, even if the slip limit of the frictional engagement members changes in response to the changes of the parameters, the minimum required reduction in the torque can be made according to the slip limit. Consequently, while the frictional engagement members can be reliably prevented from slipping, the reduction in the torque can be minimized.

In addition, according to the configuration described in claim 2, the torque limiter values are switched from one to another on the basis of the gear-shifting state while the torque phase transitions to the inertial phase in the gear-shifting process. Accordingly, even while the automatic transmission is executing a gear-shifting operation, an optimal torque-reduction control can be executed by use of the torque limiter value appropriate for the actual gear-shifting state.

In addition, according to the configuration described in claim 3, the torque-limiter-value calculation means further includes: a slip-prevention torque-limiter-value calculation means, a stalling torque-limiter-value calculation means, a double-pedaling-action torque-limiter-value calculation means, and a low-selection means for selecting the lowest value of the torque limiter value for slip prevention, the torque limiter value at the time of stalling, and the torque limiter value at the time of double pedaling action as the torque limiter value. Accordingly, the frictional engagement members can be reliably prevented from slipping based on different conditions mentioned above while the reduction in the torque can be minimized.

An embodiment of the present invention will be explained below by reference to the attached drawings. FIGS. 1 to 9 show an embodiment of the present invention:
- FIG. 1: is a view showing a configuration of a torque converter including a lock-up clutch;
- FIG. 2: is a block diagram of electronic control units of an automatic transmission and an engine;
- FIG. 3: is a view showing a map searching a torque limiter value for slip prevention;
- FIGS. 4A and 4B: are views showing a transmission input torque being changed depending on engagement states of the lock-up clutch;
- FIG. 5: is a view showing a map searching a torque required by a driver;
- FIG. 6: is a view showing a difference of an amount of torque reduction between engagement states of the lock-up clutch;
- FIG. 7: is a flow chart of a control for slip prevention of a gear-shifting clutch;
- FIG. 8: is a time chart showing a switch of a torque limiter value depending on a gear-shifting state; and
- FIG. 9: is a time chart showing a switch of a torque limiter value depending on an engagement state of the lock-up clutch.

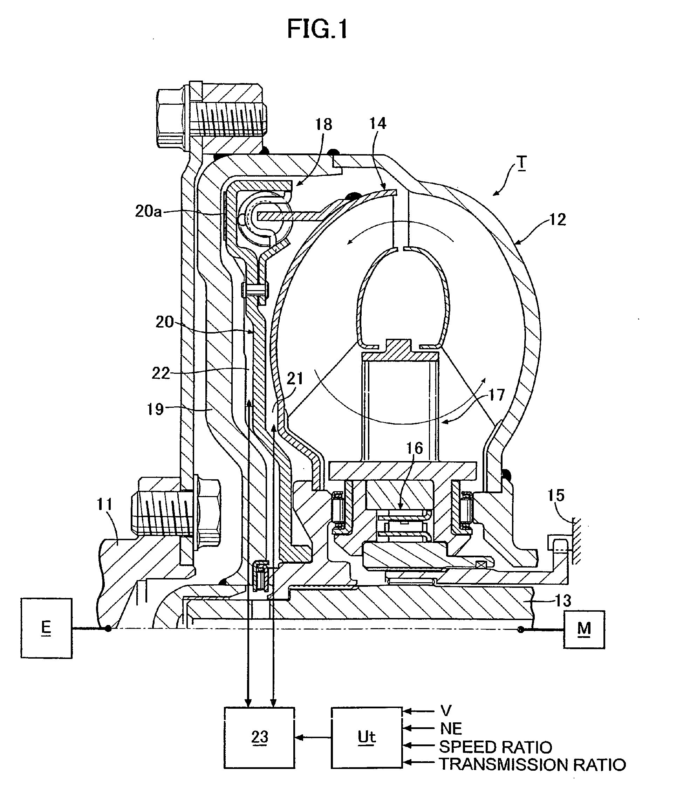

As FIG. 1 shows, a torque converter T includes: a pump impeller 12 connected to an output shaft 11 (crankshaft) of an engine E; a turbine runner 14 connected to an input shaft 13 (main shaft) of an automatic transmission M; a stator 17 supported by a casing 15 with a one-way clutch 16; and a lock-up clutch 18 capable of connecting the pump impeller 12 and the turbine runner 14 with each other.

When the pump impeller 12 connected to the output shaft 11 of the engine E rotates, oil pushed out from the pump impeller 12 in a direction indicated by the arrow flows into the turbine runner 14, gives a torque to the turbine runner 14 to rotate the input shaft 13 of the automatic transmission M, then passes through the stator 17, and flows back into the pump impeller 12. In this way, the rotation of the output shaft 11 of the engine E is transmitted to the input shaft 13 of the automatic transmission M.

The lock-up clutch 18 includes a clutch piston 20 capable of contacting an inner surface of a torque-converter cover 19. A first fluid chamber 21 and a second fluid chamber 22 are formed respectively at the two sides of the clutch piston 20. Hydraulic-pressure controlling means 23 for supplying hydraulic pressures to control the lock-up clutch 18 is provided to the first and the second fluid chambers 21 and 22. The hydraulic-pressure controlling means 23 includes a hydraulic pump and a hydraulic-pressure control valve, and is controlled by an electronic control unit Ut in which a vehicle speed V, an engine revolution NE, a speed ratio of the torque converter T, a transmission ratio of the automatic transmission M, and the like are inputted.

With a hydraulic pressure being supplied to the first fluid chamber 21, a facing 20a of the clutch piston 20 contacts the inner surface of the torque-converter cover 19, resulting in an engagement of the lock-up clutch 18. Consequently, the torque of the output shaft 11 of the engine E is transmitted directly to the input shaft 13 of the automatic transmission M. With the supply of a hydraulic pressure to the second fluid chamber 22, the facing 20a of the clutch piston 20 is separated away from the torque-converter cover 19, resulting in a disengagement of the lock-up clutch 18. Consequently, the mechanical connection of the output shaft 11 of the engine E to the input shaft 13 of the automatic transmission M is cut off. Controlling the difference between the pressure of the first fluid chamber 21 and that of the second fluid chamber 22 allows the slipping of the torque-converter cover 19 and the facing 20a of the clutch piston 20 to take place, and thus makes it possible to arbitrarily control the speed ratio of the torque converter T.

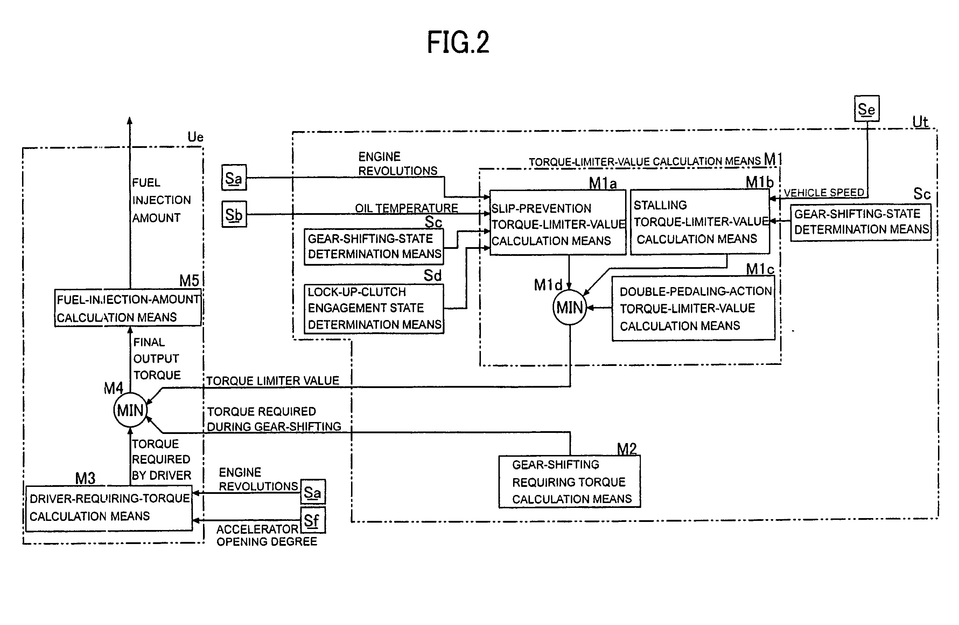

As FIG. 2 shows, the electronic control unit Ut of the automatic transmission M includes torque-limiter-value calculation means M1 and gear-shifting requiring torque calculation means M2. The torque-limiter-value calculation means M1 calculates a torque limiter value that is an upper limit of the torque that can be outputted by the engine E to the automatic transmission M within a degree that the slipping of the gear-shifting clutch does not take place. The gear-shifting requiring torque calculation means M2 calculates a torque required at the gear shifting so as to reduce, down to the minimum level, the shock caused when the automatic transmission M performs gear shifting. The torque-limiter-value calculation means M1 includes: slip-prevention torque-limiter-value calculation means M1a; stalling torque-limiter-value calculation means M1b; double-pedaling-action torque-limiter-value calculation means M1c; and low-selection means M1d.

Connected to the slip-prevention torque-limiter-value calculation means M1a are: engine-revolutions detection means Sa for detecting engine revolutions; oil-temperature detection means Sb for detecting the temperature of the oil for the automatic transmission M; gear-shifting-state determination means Sc for determining the gear-shifting state (i.e., the selected gear and the gear-shifting phase) of the automatic transmission M; and lock-up-clutch engagement state determination means Sd for determining the engagement state of the lock-up clutch 18.

Based on the engine revolutions, the temperature of the oil for the automatic transmission M, the gear-shifting state of the automatic transmission M, and the engagement state of the lock-up clutch 18, the slip-prevention torque-limiter-value calculation means M1a calculates, by map searching, a torque limiter value for slip prevention that can be outputted by the engine E to the automatic transmission M within a degree that the slipping of the gear-shifting clutch does not take place.

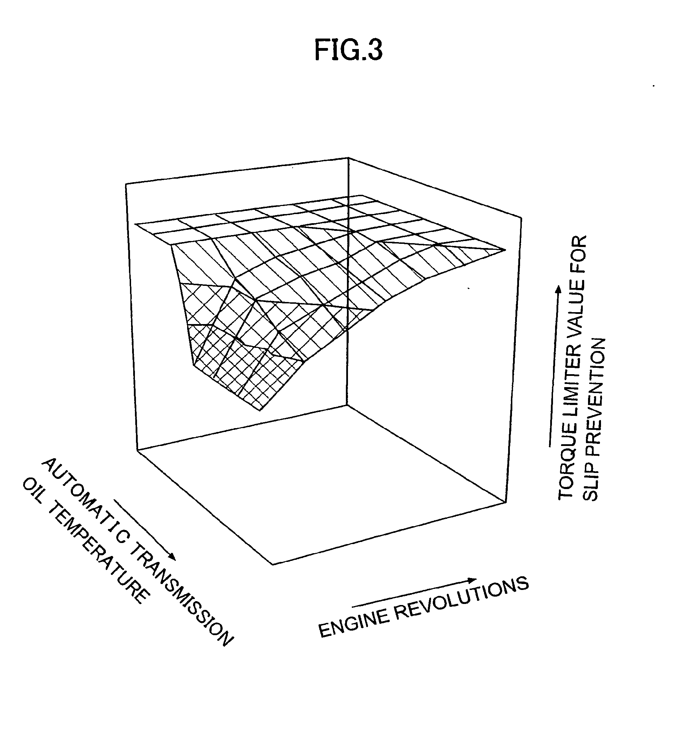

As FIG. 3 shows, the map on which the calculation of the torque limiter value for slip prevention is based uses, as parameters, the temperature of the oil for the automatic transmission M and the engine revolutions. The map is set up in the following way: as the oil temperature rises, the torque limiter value for slip prevention decreases; and in addition, as the engine revolutions increase, the torque limiter value for slip prevention increases. Different maps are used depending upon whether the lock-up clutch 18 is in engagement or in disengagement, which is determined by the lock-up-clutch engagement state determination means Sd; and in addition, different maps are used depending upon the selected gear, which is determined by the gear-shifting-state determination means Sc. Accordingly, in the case of a 5-speed automatic transmission M, ten maps in total are selectively used.

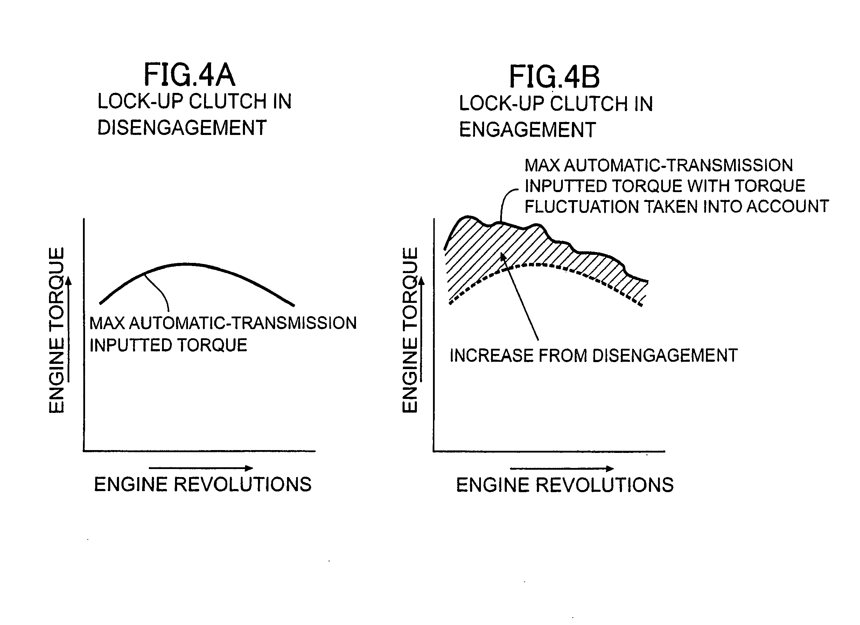

FIG. 4A shows the torque inputted into the automatic transmission M from the engine E while the lock-up clutch 18 is in disengagement. FIG. 4B shows the torque inputted into the automatic transmission M from the engine E while the lock-up clutch 18 is in engagement. While the lock-up clutch 18 is in disengagement, the slipping of the torque converter T absorbs the fluctuation of the torque of the engine E. The absorption makes it difficult for the fluctuation of the torque of the engine E to be transmitted to the automatic transmission M. In contrast, while the lock-up clutch 18 is in engagement, the fluctuation of the torque of the engine E is transmitted, as it is, to the automatic transmission M. Consequently, even when the engine E outputs the same torque, the maximum value of the torque inputted into the automatic transmission M via the torque converter T while the lock-up clutch 18 is in engagement becomes larger than the corresponding maximum value while the lock-up clutch 18 is in disengagement.

Accordingly, the torque limiter value for slip prevention, which is a torque upper limit outputted by the engine E without causing the slipping of the gear-shifting clutch, is set so that the value obtained by searching the map selected while the lock-up clutch 18 is in engagement is smaller than the value obtained by searching the map selected while the lock-up clutch 18 is in disengagement.

Referring back to FIG. 2, if, on the basis of the vehicle speed detected by vehicle-speed detection means Se and the gear-shifting state determined by the gear-shifting-state determination means Sc, it is determined that the torque converter T stalls, the stalling torque-limiter-value calculation means M1b outputs the torque limiter value at the time of stalling. Setting the torque limiter value at the time of stalling is provided for the following reason. If the torque converter T stalls, the torque ratio rises up to the maximum. The torque thus inputted into the automatic transmission M becomes so large that the slipping of the gear-shifting clutch may possibly take place.

If it is determined that both the accelerator pedal and the brake pedal are depressed simultaneously, the double-pedaling-action torque-limiter-value calculation means M1c outputs the torque limiter value at the time of double pedaling action. Setting the torque limiter value at the time of double pedaling action is provided for the following reason. If the driver depresses the brake pedal while depressing also the accelerator pedal, the engine torque increases while the vehicle is not in motion. The torque thus inputted into the automatic transmission M becomes so large that the slipping of the gear-shifting clutch may possibly take place.

The lowest value of the torque limiter value for slip prevention, the torque limiter value at the time of stalling, and the torque limiter value at the time of double pedaling action is selected as the torque limiter value by the low-selection means M1d. The torque limiter value thus selected is outputted, together with the torque required during gear shifting calculated by the gear-shifting requiring torque calculation means M2, to an electronic control unit Ue of the engine E by means of the Controller Area Network (CAN).

The electronic control unit Ue controls the engine torque by controlling the amount of fuel injection of the engine E. The electronic control unit Ue includes driver-requiring-torque calculation means M3, low-selection means M4, and fuel-injection-amount calculation means M5.

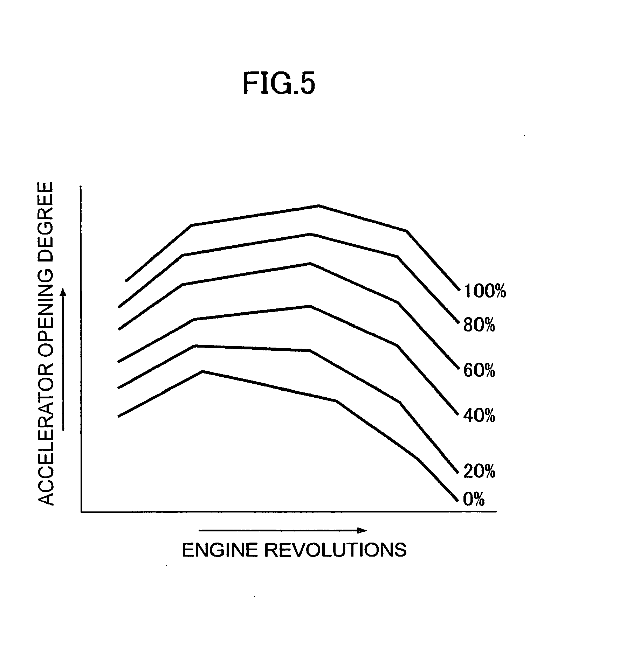

When calculating the torque required by the driver, the driver-requiring-torque calculation means M3 applies the engine revolutions detected by the engine-revolutions detection means Sa and the accelerator opening degree detected by accelerator-opening-degree detection means Sf to the map shown in FIG. 5. The low-selection means M4 selects, as the final output torque, the lowest one of the torque required by the driver calculated by the driver-requiring-torque calculation means M3, the torque limiter value, and the torque required during the gear shifting. Note that the torque limiter value and the torque required during the gear shifting are inputted into the driver-requiring-torque calculation means M3 from the electronic control unit Ut of the automatic transmission M by means of the CAN. The low-selection means M4 outputs the final output torque thus selected to the fuel-injection-amount calculation means M5. Then the fuel-injection-amount calculation means M5 controls the amount of fuel injection so that the engine E can output the final output torque.

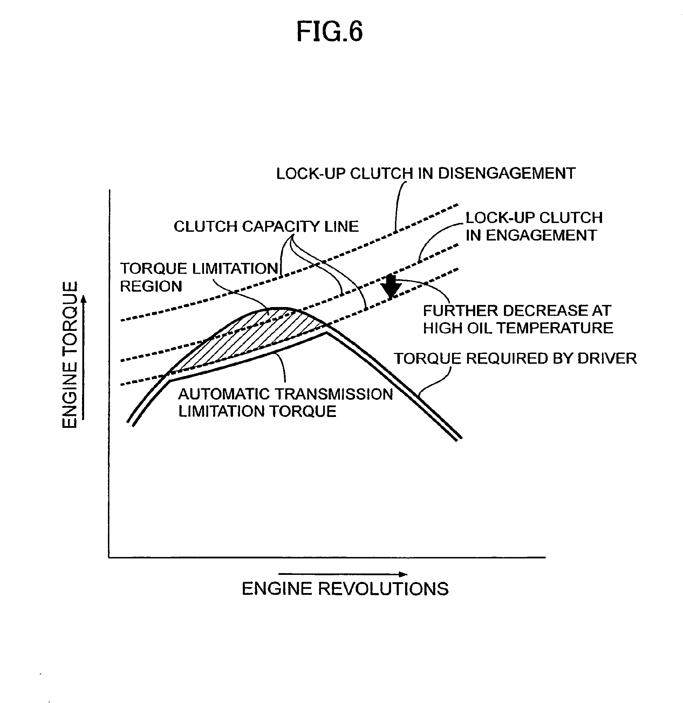

As FIG. 6 shows, the maximum engine torque that will not cause the slipping of the gear-shifting clutch of the automatic transmission M (i.e., the torque limiter value) decreases if the lock-up clutch 18 is in engagement. While the lock-up clutch 18 is in disengagement, the torque limiter value stays above the torque required by the driver. Accordingly, even when the engine E outputs the torque equal to the torque required by the driver, no slipping of the gear-shifting clutch will take place. In contrast, while the lock-up clutch 18 is in engagement, the torque limiter value stays below the torque required by the driver. Accordingly, if the engine E outputs the torque equal to the torque required by the driver, the slipping of the gear-shifting clutch will take place. For this reason, to prevent the slipping of the gear-shifting clutch, the final output torque of the engine E has to be lowered from the level equal to the torque required by the driver down to the level equal to the torque limiter value.

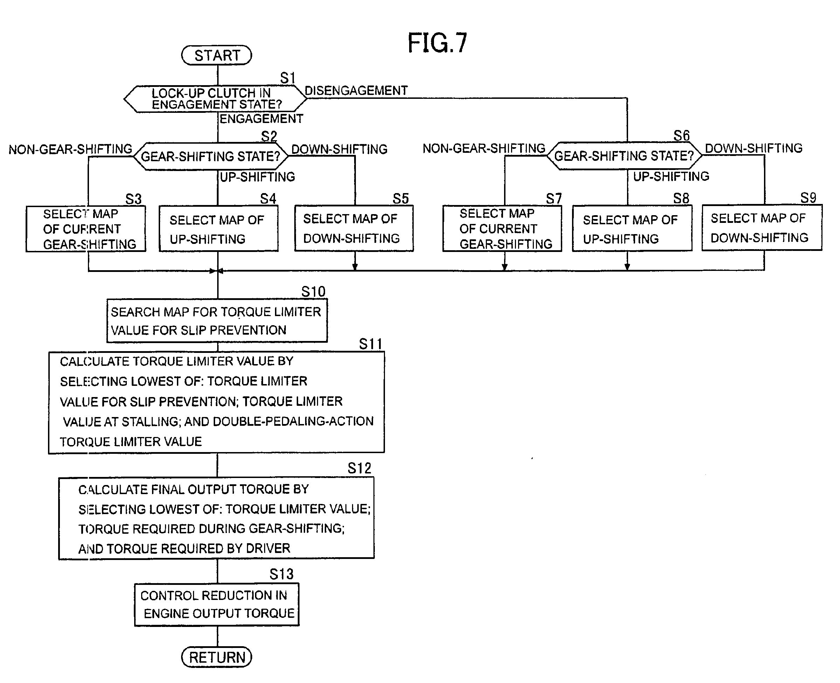

Subsequently, the above-described operation will be further described by referring to the flow chart shown in FIG. 7.

Firstly, if the lock-up clutch 18 is in engagement in step S1 and if the gear-shifting state of the automatic transmission M is non-gear-shifting state in step S2, in step S3 the map currently selected is still selected. If the gear-shifting state in the step S2 is the up-shifting state, that is, shifting the gears to a higher gear, in step S4 the map for the currently selected gear is switched to the map for the higher gear. If the gear-shifting state in the step S2 is the down-shifting state, that is, shifting to a lower gear, in step S5 the map for the currently selected gear is switched to the map for the lower gear.

If the lock-up clutch 18 is in disengagement in the step S1 and if the gear-shifting state of the automatic transmission M is non-gear-shifting state in step S6, in step S7 the map currently selected is still selected. If the gear-shifting state in the step S6 is the up-shifting state, that is, shifting to a higher gear, in step S8 the map for the currently selected gear is switched to the map for the higher gear. If the gear-shifting state in the step S6 is the down-shifting state, that is, shifting to a lower gear, in step S9 the map for the currently selected gear is switched to the map for the lower gear.

The switching of the maps at each of the steps S4, S5, S8, and S9 is executed while the torque phase that is the earlier phase transitions to the inertial phase that is the later phase in the gear-shifting process. In the torque phase, the gear-shifting clutch for the gear currently selected is transitioned from the engagement state to the disengagement state, and the gear-shifting clutch for the gear to be selected next is transitioned from the disengagement state to the engagement state. In addition, during the transitions, any change in the engine revolutions do not occur. In the inertial phase, the gear-shifting clutch for the gear currently selected is disengaged while slipping, and the gear-shifting clutch for the gear to be selected next is engaged while slipping. In the meanwhile, the engine revolutions decrease in the case of the up-shifting whereas the engine revolutions increase in the case of the down-shifting.

In the subsequent step S10, the torque limiter value for slip prevention is searched from each of the maps selected in the steps S3 to S5 and in the steps S7 to S9. In this event, the map for the gear currently selected is used in the torque phase whereas the map for the gear be selected next is used in the inertial phase. Accordingly, a map appropriate for the ever-changing gear-shifting state is always used, and thus a highly accurate torque limiter value for slip prevention can be calculated.

In the subsequent step S11, the lowest value of the torque limiter value for slip prevention, the torque limiter value at the time of stalling, the torque limiter value at the time of double-pedaling action is selected as the torque limiter value. Furthermore, in step S12, the lowest value of the torque required by the driver, the torque limiter value, and the torque required during the gear shifting is selected as the final output torque. In the end, in step S13, the amount of fuel injection is controlled so that the output torque of the engine E can be reduced down to the level of the final output torque. In this way, the slipping of the gear-shifting clutch of the automatic transmission M is prevented from taking place.

As has been described thus far, when the torque limiter value for slip prevention is calculated, the engagement state of the lock-up clutch 18 of the torque converter T, the temperature of the oil for the automatic transmission M, and the gear-shifting state of the automatic transmission M (the selected gear and the gear-shifting phase) are taken into account. Accordingly, while the slipping of the gear-shifting clutch is prevented reliably, the reduction of the output torque of the engine E can be made as small as possible.

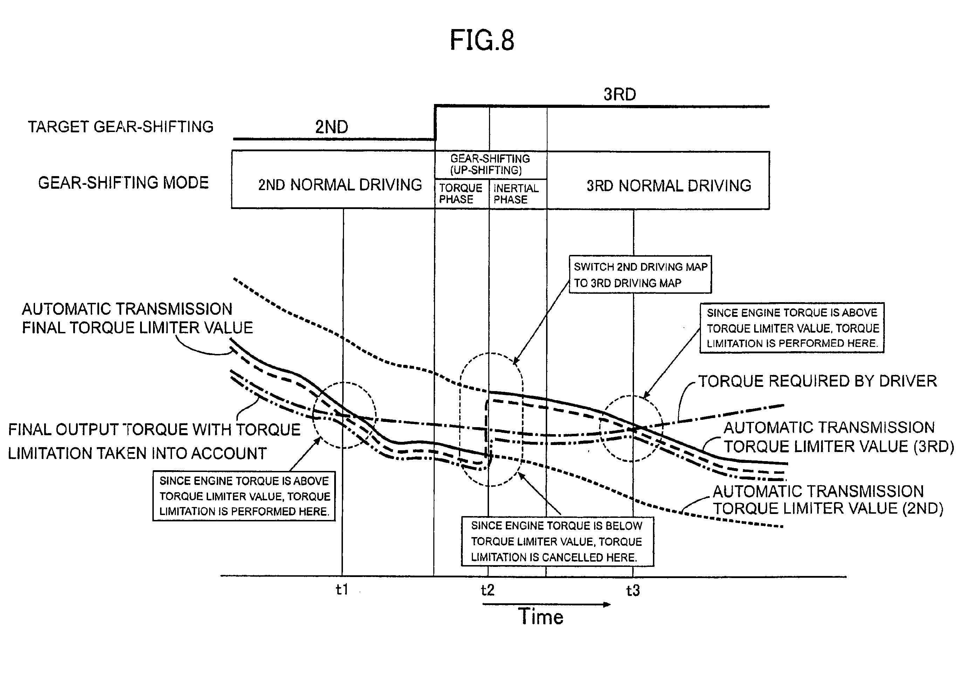

Subsequently, the operation of the up-shifting of the gears from the second gear to the third gear will be described by referring to the time chart shown in FIG. 8. In the time chart, the solid line and the dotted line represent the torque limiter values for the second gear and for the third gear. The broken line represents the selected torque limiter value, the dashed-dotted line represents the torque required by the driver, and the dashed-two dotted line represents the final output torque.

Until the time t1, the selected torque limiter value (broken line) is the torque limiter value for the second gear (solid line). The selected torque limiter value (broken line) stays above the torque required by the driver (dashed-dotted line), so that the final output torque (dashed-two dotted line) coincides with the torque required by the driver (dashed-dotted line). In the period from the time t1 to the time t2 (at the time of the transition from the torque phase to the inertial phase), the selected torque limiter value (broken line) is the torque limiter value for the second gear (solid line). The selected torque limiter value (broken line) stays below the torque required by the driver (dashed-dotted line), so that the final output torque (dashed-two dotted line) coincides with the selected torque limiter value (broken line).

At the time t2, the map for the second gear is switched to the map for the third gear.
Then, in the subsequent period from the time t2 to the time t3, the selected torque limiter value (broken line) is the torque limiter value for the third gear (solid line). The selected torque limiter value (broken line) is above the torque required by the driver (dashed-dotted line), so that the final output torque (dashed-two dotted line) coincides with the torque required by the driver (dashed-dotted line). From the time t3 onwards, the selected torque limiter value (broken line) is below the torque required by the driver (dashed-dotted line), so that the final output torque (dashed-two dotted line) coincides with the selected torque limiter value (broken line).

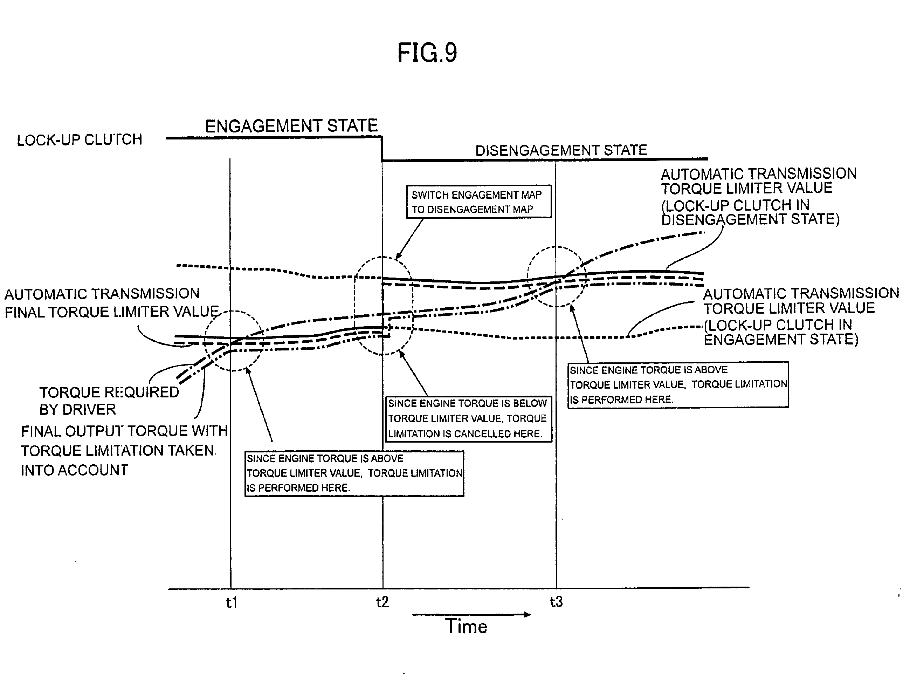

Subsequently, the operation of the transition of the lock-up clutch 18 from the engagement state to the disengagement state will be described by referring to the time chart shown in FIG. 9. In the time chart, the solid line and the dotted line represent the torque limiter values for the case where the lock-up clutch 18 is in engagement and for the case where the lock-up clutch 18 is in disengagement. The broken line represents the selected torque limiter value, the dashed-dotted line represents the torque required by the driver, and the dashed-two dotted line represents the final output torque.

Until the time t1, the selected torque limiter value (broken line) is the torque limiter value for the case where the lock-up clutch 18 is in engagement (solid line). The selected torque limiter value (broken line) stays above the torque required by the driver (dashed-dotted line), so that the final output torque (dashed-two dotted line) coincides with the torque required by the driver (dashed-dotted line). In the period from the time t1 to the time t2 (at the time of transition from engagement to the disengagement of the lock-up clutch 18), the selected torque limiter value (broken line) is the torque limiter value for the case where the lock-up clutch 18 is in engagement (solid line). The selected torque limiter value (broken line) stays below the torque required by the driver (dashed-dotted line), so that the final output torque (dashed-two dotted line) coincides with the selected torque limiter value (broken line).

At the time t2, the state of lock-up clutch 18 is transitioned from engagement state to the disengagement state. Then, in the subsequent period from the time t2 to the time t3, the selected torque limiter value (broken line) is the torque limiter value for the case where the lock-up clutch 18 is in disengagement (solid line). The selected torque limiter value (broken line) is above the torque required by the driver (dashed-dotted line), so that the final output torque (dashed-two dotted line) coincides with the torque required by the driver (dashed-dotted line). From the time t3 onwards, the selected torque limiter value (broken line) is below the torque required by the driver (dashed-dotted line), so that the final output torque (dashed-two dotted line) coincides with the selected torque limiter value (broken line).

An embodiment of the present invention has been described thus far, but various modifications in design can also be made as long as being covered by the claims.

For example, a frictional engagement member of the present invention is not limited to the gear-shifting clutch and may be a gear-shifting brake in which a rotating member is connected to the casing of the automatic transmission M.

In addition, in the embodiment, the reduction of the engine torque is achieved by the control on the amount of fuel injection, and may be achieved by a control on ignition timing.

### REFERENCE LIST

- 11: output shaft (crankshaft)
- 12: pump impeller
- 13: input shaft (main shaft)
- 14: turbine runner
- 15: casing
- 16: one-way clutch
- 17: stator
- 18: lock-up clutch
- 19: torque-converter cover
- 20: clutch piston
- 20a: facing
- 21: first fluid chamber
- 22: second fluid chamber
- 23: hydraulic-pressure controlling means
- M: automatic transmission
- M1: torque-limiter-value calculation means
- M1a: slip-prevention torque-limiter-value calculation means
- M1b: stalling torque-limiter-value calculation means
- M1c: double-pedaling-action torque-limiter-value calculation means
- M1d: low-selection means
- M2: gear-shifting requiring torque calculation means
- M3: driver-requiring-torque calculation means
- M4: low-selection means
- M5: fuel-injection-amount calculation means
- Sa: engine-revolutions detection means
- Sb: oil-temperature detection means
- Sc: gear-shifting state determination means
- Sd: lock-up-clutch engagement state determination means
- Se: vehicle-speed detection means
- T: torque converter
- Ue: electronic control unit (engine-torque control means)
- Ut: electronic control unit

## Claims

1. An engine-torque controlling apparatus for which an engine (E) and an automatic transmission (M) are connected to each other through a torque converter (T) including a lock-up clutch (18), and which controls a torque of the engine (E) so as to prevent a gear-shifting clutch of the automatic transmission (M) from slipping, wherein
the engine-torque controlling apparatus comprises:
lock-up-clutch engagement state determination means (Sd) for determining an engagement state of the lock-up clutch (18);
gear-shifting state determination means (Sc) for determining a gear-shifting state of the automatic transmission (M);
oil-temperature detection means (Sb) for detecting a temperature of oil of the automatic transmission (M);
engine-revolutions detection means (Sa) for detecting engine revolutions; and
engine-torque control means (Ue) for controlling a torque of the engine (E) on the basis of the torque limiter value;
torque-limiter-value calculation means (M1) for calculating a torque limiter value of a torque capable of being output by the engine (E) without causing any slipping of the gear-shifting clutch, **characterised in that** the torque-limiter-value calculation means (M1) calculates the torque limiter value by using, as parameters, the engagement state of the lock-up clutch (18), the oil temperature, the engine revolutions and the gear-shifting state.

2. The engine-torque controlling apparatus according to claim 1 wherein switching of the torque limiter values from one to another based on the gear-shifting state is carried out while a phase of a gear-shifting process is being transitioned from a torque phase to an inertial phase.

3. The engine-torque controlling apparatus according to claim 1 wherein the torque-limiter-value calculation means (M1) further includes:
a slip-prevention torque-limiter-value calculation means (M1a) for calculating a torque limiter value for slip prevention that can be outputted by the engine (E) to the automatic transmission (M) based on the engine revolutions, the temperature of the oil for the automatic transmission (M), the gear-shifting state of the automatic transmission (M), and the engagement state of the lock-up clutch (18);
a stalling torque-limiter-value calculation means (M1b) for outputting a torque limiter value at a time of stalling of the torque converter (T);
a double-pedaling-action torque-limiter-value calculation means (M1c) for outputting a torque limiter value at a time of double pedaling action of a brake pedal and an acceleration pedal; and
a low-selection means (M1d) for selecting the lowest value of the torque limiter value for slip prevention, the torque limiter value at the time of stalling, and the torque limiter value at the time of double pedaling action as the torque limiter value.

4. The engine-torque controlling apparatus according any of claims 1 to 3, wherein the torque-limiter-value calculation means (M1) is configured to calculate the torque limiter value by map searching, wherein different maps are used depending upon whether the lock-up clutch (18) is in engagement or in disengagement, different maps are used depending upon the selected gear, which is determined by the gear-shifting-state determination means (Sc), and each map comprises the torque limiter value based on the temperature of the oil and the engine revolutions.

## Patentansprüche

1. Motordrehmomentsteuerungsvorrichtung, für die ein Motor (E) und ein automatisches Getriebe (M) durch einen Drehmomentwandler (T) miteinander verbunden sind, der eine Überbrückungskupplung (18) beinhaltet, und der ein Drehmoment des Motors (E) steuert, so dass ein Schlupf einer Gangschaltungskupplung des automatischen Getriebes (M) vermieden wird, wobei
die Motordrehmomentsteuerungsvorrichtung beinhaltet:
Überbrückungskupplungs-Einrückzustand-Bestimmungsmittel (Sd) um einen Einrückzustand der Überbrückungskupplung (18) zu bestimmen;
Gangschaltungszustand-Bestimmungsmittel (Sc) um einen Gangschaltungszustand des automatischen Getriebes (M) zu bestimmen;
Öltemperatur-Bestimmungsmittel (Sb) um die Temperatur Öltemperatur des automatischen Getriebes (M) zu bestimmen;
Motordrehmoment-Bestimmungsmittel (Sa) um Motorumdrehungen zu bestimmen; und
Motordrehmomentsteuerungsmittel (Ue) um ein Drehmoment des Motors (E) auf der Basis des Drehmomentbegrenzerwerts zu steuern;
Drehmomentbegrenzerwert-Berechnungsmittel (M1) um einen Drehmomentbegrenzerwert eines Drehmoments zu berechnen, das vom Motor (E) abgegeben werden kann ohne ein Rutschen der Gangschaltungskupplung zu verursachen,
**dadurch gekennzeichnet dass**
das Drehmomentbegrenzerwert-Berechnungsmittel (M1) den Drehmomentbegrenzerwert berechnet, indem es als Parameter den Einrückzustand der Überbrückungskupplung (18), die Öltemperatur, die Motorumdrehungen und den Gangschaltungszustand benutzt.

2. Die Motordrehmomentsteuerungsvorrichtung gemäß Anspruch 1, wobei
ein Umstellen des Drehmomentbegrenzerwerts vom einen zum anderen basierend auf dem Gangschaltungszustand ausgeführt wird, während eine Phase eines Gangschaltungsprozesses von einer Drehmomentphase in eine Trägheitsphase übergeht.

3. Die Motordrehmomentsteuerungsvorrichtung gemäß Anspruch 1, wobei
das Drehmomentbegrenzerwert-Berechnungsmittel (M1) weiter beinhaltet:
ein Rutschvermeidungs-Drehmomentbegrenzerwert-Berechnungsmittel (M1a) um einen Drehmomentbegrenzerwert für eine Rutschvermeidung zu berechnen, der vom Motor (E) an das automatische Getriebe (M) abgegeben werden kann, basierend auf den Motorumdrehungen, der Temperatur des Öls für das automatische Getriebe (M), des Gangschaltungszustands des automatischen Getriebes (M), und dem Einrückzustand der Überbrückungskupplung (18);
ein Abstelldrehmomentbegrenzerwert-Berechnungsmittel (M1b) zum Ausgeben eines Drehmomentbegrenzerwerts zu einem Zeitpunkt, an dem der Drehmomentwandler (T) abgestellt wird;
ein Doppelpedalbetätigungsdrehmomentbegrenzerwert-Berechnungsmittel (M1c) zum Ausgeben eines Drehmomentbegrenzerwerts zu einem Zeitpunkt einer Doppelpedalbetätigung eines Bremspedals und eines Gaspedals; und
ein Niedrig-Auswahlmittel zur Auswahl des niedrigsten Werts aus dem Drehmomentbegrenzerwert für Rutschvermeidung, dem Drehmomentbegrenzerwert zu einem Zeitpunkt des Blockierens, und dem Drehmomentbegrenzerwert zu einem Zeitpunkt einer Doppelpedalbetätigung als den Drehmomentbegrenzerwert.

4. Die Motordrehmomentsteuerungsvorrichtung gemäß einem der Ansprüche 1 bis 3, wobei das Drehmomentbegrenzerwert-Berechnungsmittel (M1) gestaltet ist, den Drehmomentbegrenzerwert durch Kennfeldsuche zu berechnen, wobei verschiedene Kennfelder benutzt werden, abhängig davon ob die Überbrückungskupplung (18) ein- oder ausgerückt ist, verschiedene Kennfelder werden genutzt abhängig vom ausgewählten Gang, der durch das Gangschaltungszustandsbestimmungsmittel festgelegt wird (Sc), und jedes Kennfeld beinhaltet den Drehmomentbegrenzerwert basierend auf der Öltemperatur und den Motorumdrehungen.

## Revendications

1. Appareil de régulation de couple moteur pour lequel un moteur (E) et une transmission automatique (M) sont raccordés l'un à l'autre via un convertisseur de couple (T) comprenant un embrayage de verrouillage (18), et qui régule un couple du moteur (E) de façon à empêcher un embrayage de changement de vitesse de la transmission automatique (M) de patiner, dans lequel
l'appareil de régulation de couple moteur comprend :
un moyen de détermination d'état d'engagement d'embrayage de verrouillage (Sd) permettant de déterminer un état d'engagement de l'embrayage de verrouillage (18) ;
un moyen de détermination d'état de changement de vitesse (Sc) permettant de déterminer un état de changement de vitesse de la transmission automatique (M) ;
un moyen de détection de température d'huile (Sb) permettant de détecter une température d'huile de la transmission automatique (M) ;
un moyen de détection de tours-moteur (Sa) permettant de détecter les tours-moteur ; et
un moyen de régulation de couple moteur (Ue) permettant de réguler un couple du moteur (E) sur la base de la valeur de limiteur de couple ;
un moyen de calcul de valeur de limiteur de couple (M1) permettant de calculer une valeur de limiteur de couple d'un couple capable d'être produit par le moteur (E) sans provoquer de patinage de l'embrayage de changement de vitesse, **caractérisé en ce que** le moyen de calcul de valeur de limiteur de couple (M1) calcule la valeur de limiteur de couple en utilisant, comme paramètres, l'état d'engagement de l'embrayage de verrouillage (18), la température de l'huile, les tours-moteur et l'état de changement de vitesse.

2. Appareil de régulation de couple moteur selon la revendication 1, dans lequel le passage des valeurs de limiteur de couple de l'une à l'autre sur la base de l'état de changement de vitesse est réalisé pendant qu'une phase du processus de changement de vitesse connaît une transition entre une phase de couple et une phase inertielle.

3. Appareil de régulation de couple moteur selon la revendication 1, dans lequel le moyen de calcul de valeur de limiteur de couple (M1) comprend en outre :
un moyen de calcul de valeur de limiteur de couple anti-patinage (M1a) permettant de calculer une valeur de limiteur de couple pour empêcher le patinage qui peut être produit par le moteur (E) vers la transmission automatique (M) en se basant sur les tours-moteur, la température de l'huile pour la transmission automatique (M), l'état de changement de vitesse de la transmission automatique (M), et l'état d'engagement de l'embrayage de verrouillage (18) ;
un moyen de calcul de valeur de limiteur de couple de calage (M1b) permettant de produire une valeur de limiteur de couple à un moment de calage du convertisseur de couple (T) ;
un moyen de calcul de valeur de limiteur de couple d'action de double pédalage (M1c) permettant de produire une valeur de limiteur de couple à un moment d'action de double pédalage d'une pédale de frein et d'une pédale d'accélération ; et
un moyen de sélection inférieure (M1d) permettant de sélectionner la valeur la plus basse de la valeur de limiteur de couple pour éviter le patinage, la valeur de limiteur de couple au moment du calage et la valeur de limiteur de couple au moment de l'action de double pédalage en tant que valeur de limiteur de couple.

4. Appareil de régulation de couple moteur selon l'une quelconque des revendications 1 à 3, dans lequel le moyen de calcul de valeur de limiteur de couple (M1) est configuré pour calculer la valeur de limiteur de couple par recherche par carte, dans lequel différentes cartes sont utilisées en fonction de l'engagement ou du non-engagement de l'embrayage de verrouillage (18), différentes cartes sont utilisées en fonction de la vitesse sélectionnée, ce qui est déterminé par le moyen de détermination d'état de changement de vitesse (Sc), et chaque carte comprend la valeur de limiteur de couple basée sur la température de l'huile et les tours-moteur.
